# EUROPÄISCHE PATENTANMELDUNG

(11) **EP 1 993 067 A1**
(43) Veröffentlichungstag der Anmeldung: **19.11.2008**
(21) Anmeldenummer: 08008882.6
(22) Anmeldetag: 14.05.2008
(51) Int. Cl.: G06Q 20/00, G06Q 30/00, G01S 13/82

(54) **Verfahren zum Kontrollieren und Abrechnen von Werbemaßnahmen**

(30) Priorität: 18.05.2007 AT 801107 U
(71) Anmelder: Zakel, Dieter, Dr. MA, 1010 Wien (AT)
(72) Erfinder: Zakel, Dieter, Dr. MA, 1010 Wien (AT)
(74) Vertreter: Burgstaller, Peter

(57) **Zusammenfassung**

Die. Erfindung betrifft ein Verfahren zum Kontrollieren und Abrechnen von Werbemaßnahmen, die auf von Personen mitzuführenden Gegenständen basieren, die mit einer wahrnehmbaren Werbebotschaft ausgestattet sind.

Das Ankommen eines RFID-Transponders, der an einem derartigen Gegenstand angebracht ist, an einem Ort, an dem die Anwesenheit des Gegenstandes aus Werbegründen erwünscht ist, wird durch ein dort angeordnetes RFID-Lesegerät automatisch erkannt. Die Tatsache von derartigen Erkennungsvorgängen wird automatisch von einer mit dem Lesegerät über ein Datennetz verbundenen Datenverarbeitungsanlage mitgeteilt. Die Erkennungsvorgänge werden automatisch mitgezählt und es wird ihnen ein Geldwert zugeordnet.

## Beschreibung

Die Erfindung betrifft ein Verfahren zum Kontrollieren und Abrechnen von Werbemaßnahmen.

Eine wichtige Kenngröße zur Beurteilung des Wertes einer Werbemaßnahmen ist die Zahl, die besagt, wie oft eine Werbebotschaft tatsächlich beim Zielpublikum ankommt. Wo dies möglich ist, versucht man daher Werbeaufträge nach dieser Kennzahl abzurechnen und weniger danach, wie oft eine Werbebotschaft gedruckt, aufgelegt oder versendet wird.

Am Beispiel Internet wird beispielsweise anhand der Klickrate/-häufigkeit in Homepages oder an Links die Anzahl der Zugriffe von potenziellen Kunden gezählt. Am Beispiel Fernsehwerbung ist der Preis je Werbesekunde von durch Erhebungen festgestellten Einschaltzahlen abhängig. Plakatwandflächen werden umso teurer verkauft, umso größer die Passantenfrequenz davor ist.

Die US 2002/0165758 A1 beschreibt die Verwendung von mit RFID-Transponder versehenen Gegenständen, die von Personen in einem Geschäft mitgetragen werden, um so das Verhalten dieser Personen beobachten zu können. Die beobachteten Daten können dazu verwendet werden, zielgerichtete Werbung zu erstellen und Geschäfts- und Überwachungssysteme zu verbessern.

Die JP 11258991 A2 beschreibt ein Verfahren zum Feststellen der Reaktion von Kunden auf Merchandise-Produkte, also auf Produkte, die mit einer Werbebotschaft, wie typischerweise einem Logo, das auch auf ein anderes Produkt oder eine andere Dienstleistung hinweist, versehen sind. Die Produkte sind mit einer per Funk identifizierbaren Etikette, also einem RFID-Transponder, ausgestattet und liegen auf einer Ablage, wie beispielsweise einem Regal oder einer Vitrine, welche mit Antennen zur Übertragung der Funksignale zwischen einer zentralen Erfassungseinheit und den Etiketten versehen sind. Durch die zentrale Erfassungseinheit wird unabhängig davon, ob die Produkte an einer Kasse zu bezahlen sind oder nicht, registriert, welche Produkte in welcher Zahl von Kunden entnommen werden. Mit dem Verfahren kann zwar die Entnahme von Produkten, die der Werbung dienen, aus einem Regal gemessen werden, es kann aber nicht gemessen werden, ob die Produkte dann tatsächlich werbewirksam eingesetzt werden, nämlich an Orten gezeigt werden, an denen sich Zielpublikum befindet.

Der Erfinder hat sich die Aufgabe gestellt, ein Verfahren zur Abrechnung von Werbemaßnahmen bereitzustellen, das auf von Personen mitgeführten Gegenständen, die mit einer Werbebotschaft versehen sind, basiert; als Berechnungsbasis soll die tatsächliche Verwendung der Gegenstände im Sinne der Werbemaßnahme dienen. Die Aufgabe wird durch folgendes Paket an Maßnahmen gelöst:
Die Produkte werden mit einem per elektromagnetische Wellen identifizierbaren Elektronikteil - im Folgenden "RFID-Transponder" genannt - versehen.

An Stellen, die aus Werbegründen für vorteilhaft erachtet werden, wenn Produkte dort mitgeführt werden, werden Messstellen eingerichtet, also RFID-Lesegeräte angeordnet, die die Annäherung eines derartigen RFID-Transponders detektieren und den RFID-Transponder identifizieren können.

Die Annährungen von RFID-Transponder an die einzelnen Messstellen werden von diesen registriert, Informationen dazu automatisiert und auf elektronischem Weg an eine - im Normalfall mehreren Messstellen gemeinsam zugeordnete - Datenverarbeitungsanlage übermittelt.

In der Datenverarbeitungsanlage werden die einzelnen Annäherungen mitgezählt und diesen ein Geldwert zugeordnet.

Ein RFID-Transponder besteht aus einem Mikrochip, einer Antenne, einem Träger und unter Umständen einer Energiequelle. Der Mikrochip beinhaltet eine eindeutige Identifizierungsinformation, typischerweise eine Zahlenfolge, welche bei per Funk entsprechend einem festgelegten Protokoll erfolgender Aufforderung durch ein RFID-Lesegerät an dieses gesendet wird. Die Identifizierungsinformation wird an den Mikrochip entweder bei dessen Herstellung wie eine Seriennummer eingegeben, oder sie wird bei einem nachträglichen Schreibvorgang eingebracht.

RFID-Transponder, die auch die erforderliche Reichweite haben, sind ohne weiteres in genügend kleiner und genügend flexibler Bauweise erhältlich, um an vielen Produkten unauffällig angebracht werden zu können. Beispielsweise kann ein RFID-Transponder bei Kleidungsstücken an der Rückseite des eingenähten Etiketts mit den Textilpflegesymbolen angebracht sein. Typischerweise können RFID-Transponder auch an einem aufgenähten oder aufgeklebten flächigen Träger für ein Werbesymbol angebracht sein.

RFID-Lesegeräte sind an Orten anzubringen, die durch die Werbemaßnahme anzusprechenden Personen stark frequentiert werden. Bestimmungsgemäß können und sollen diese Orte öffentlich zugänglich sein. Sie können auch weit entfernt von jenen Orten liegen, an denen die mit den RFID-Transpondern ausgestatteten Produkte verkauft oder ausgegeben werden.

Vorzugsweise wird ein RFID-Lesegerät an einer Engstelle eines Verkehrsweges angeordnet, da vorbeikommende Personen dem RFID-Lesegerät dabei zwangsweise nahe kommen. Je besser das gelingt, desto besser kann mit RFID-Transpondern mit relativ kleinerer Reichweite das Auslangen gefunden werden. Damit können auch passive RFID-Transponder, die im allgemeinen eine kleinere Reichweite als aktive RFID-Transponder aufweisen, verwendet werden. Mit dem Zusatz "passiv" ist gemeint, dass ein RFID-Transponder selbst keine Batterie aufweist und daher die für die Funktion erforderliche Energie dem vom RFID-Lesegerät ausgesandten elektromagnetischen Feld entnimmt. Durch die Anbringung eines RFID-Lesegerätes an einer Engestelle und eine entsprechend niedrige Reichweite der Kommunikation zwischen RFID-Transponder und RFID-Lesegerät werden auch die oftmals mit "Kollision" benannten Probleme vermieden, die dann auftreten können, wenn sich viele RFID-Transponder gleichzeitig im Bereich eines RFID-Lesegerätes befinden.

Typische Anbringungsorte für RFID-Lesegeräte sind daher Tore, Rolltreppen, Fußgängerschranken an Zugängen zu öffentlichen Verkehrsmitteln, ganz allgemein schmale Durchgänge, Schrankenanlagen von Autoabstellbereichen, Personenlifte und deren Zugangsstellen, Schalterbereiche.

Für die Bauweisen und das Zusammenwirken von RFID-Transpondern und RFID-Lesegeräten gibt es entsprechend dem Stand der Technik eine Vielzahl von erprobten und einsatzfähigen Lösungen, weshalb hier auf eine detailliertere Erörterung verzichtet wird.

Vorzugsweise werden die RFID-Lesegeräte nicht als einzelne unabhängige Geräte angewendet, sondern es werden mehrere RFID-Lesegeräte verwendet die über ein Datennetz mit einer gemeinsamen, zentralen Datenverarbeitungsanlage in Verbindung stehen. Mit "Datennetz" ist ein Netz gemeint, in das Daten übertragen werden. Dabei ist es egal auf welcher konkreten Technologie wie beispielsweise Glasfaser, DSL, Koaxialkabel, Funk etc. die Übertragung funktioniert. In diesem Sinne ist auch das Internet als Datennetz zu verstehen.

Vorzugsweise wird von der Datenverarbeitungsanlage an die RFID-Lesegeräte die Identitätsinformation der zu überwachenden RFID-Transponder, beispielsweise in Form von Nummernkreisen, mitgeteilt und dort lokal gespeichert. Wenn an ein RFID-Lesegerät ein damit kompatibler RFID-Transponder angenähert wird, so wird seine Identitätskennung durch das RFID-Lesegerät ausgelesen. Stimmt die Kennung mit einer zu überwachenden Kennung überein, so liegt ein zu wertender Erkennungsvorgang vor. Das Ereignis der Annäherung dieses RFID-Transponders an das betreffende RFID-Lesegerät wird über das Datennetz an die zentrale Datenverarbeitungsanlage mitgeteilt. Vorzugsweise werden diese Daten nicht nach jedem einzelnen zu wertenden Erkennungsvorgang übermittelt, sondern in gesammelter Form, entweder in bestimmten Zeitintervallen oder nach Vorliegen einer bestimmten Anzahl von zu wertenden Erkennungsvorgängen oder nach Aufforderung durch die zentrale Datenverarbeitungsanlage.

In der Datenverarbeitungsanlage wird den einzelnen zu wertenden Erkennungsvorgängen ein Geldwert zugeordnet, der dann vom Werbekunden an das Werbeunternehmen bzw. vom Werbekunden oder dem Werbeunternehmen an die Person, die den mit dem RFID-Transponder versehen Gegenstand mitführt, bezahlt wird.

Je mehr Daten je zu wertendem Erkennungsvorgang berücksichtigt werden, desto individueller kann den einzelnen Erkennungsvorgängen ein Geldwert zugeordnet werden. So können beispielsweise unterschiedlichen Lesestellen, unterschiedlichen Tages- und Wochenzeiten an denen ein zu wertender Erkennungsvorgang erfolgt und unterschiedlichen Nummernkreisen der RFID-Transponder, unterschiedliche Geldwerte je zu wertendem Erkennungsvorgang zugeordnet werden. Ebenso kann auch die Anzahl der unterschiedlichen detektierten, zu wertenden RFID-Transponder stärker honoriert werden als die Gesamtanzahl von zu wertenden Erkennungsvorgängen in der auch Mehrfacherkennungen einzelner RFID-Transponder enthalten sind.

Das erfindungsgemäße Verfahren kann beispielsweise angewandt werden, indem ein mit Werbung beauftragtes Unternehmen Gegenstände, die mit einer Werbebotschaft versehen sind, an Endverbraucher in Umlauf bringt, wobei die Endverbraucher in weiterer Folge durch die Nutzung oder das Tragen dieser Gegenstände an bestimmten Orten einen Verrechnungsvorgang auslösen, auf Grund dessen das Werbeunternehmen bezahlt wird. Es ist aber damit auch möglich, direkt jene Personen, die einen mit einer Werbeinformation versehenen Gegenstand an bestimmten Orten mitführen, für die dadurch durchgeführte Werbetätigkeit zu bezahlen.

Mit Hilfe des erfindungsgemäßen Verfahrens wird es mit wirtschaftlich leistbaren und verlässlich funktionierenden Mitteln erstmals möglich, Werbemaßnahmen die auf mitgeführten Werbeträgern basieren, entsprechend dem tatsächlichen Einsatz der Werbeträger abzurechnen.

## Patentansprüche

1. Verfahren zum Kontrollieren und Abrechnen von Werbemaßnahmen, die auf von Personen mitzuführenden Gegenständen basieren und mit einer wahrnehmbaren Werbebotschaft ausgestattet sind, **dadurch gekennzeichnet, dass** das Ankommen eines RFID-Transponders, der an einem derartigen Gegenstand angebracht ist, an einem Ort, an dem die Anwesenheit des Gegenstandes aus Werbegründen erwünscht ist, durch ein dort angeordnetes RFID-Lesegerät automatisch erkannt wird, dass die Tatsache von derartigen Erkennungsvorgängen automatisch einer mit dem Lesegerät über ein Datennetz verbundenen Datenverarbeitungsanlage mitgeteilt wird, dass die Erkennungsvorgänge automatisch mitgezählt werden und ihnen ein Geldwert zugeordnet wird.

2. Verfahren nach Anspruch 1, **dadurch gekennzeichnet, dass** mehrere, zum Erkennen des Ankommens eines RFID-Transponders geeignete RFID-Lesegeräte an unterschiedlichen, voneinander entfernt angeordneten Orten angebracht sind und dass die einzelnen Erkennungsvorgänge an einer gemeinsamen Datenverarbeitungsanlage mitgezählt werden.

3. Verfahren nach Anspruch 1 oder 2, **dadurch gekennzeichnet, dass** Orte an denen RFID-Lesegeräte angeordnet sind, von jenen Ausgabe- bzw. Verkaufsstellen aus, an denen die mit dem RFID-Transponder versehen Gegenstände an Personen abgegeben werden, nur unter Benützung öffentlicher Straßen oder Wege erreichbar sind.

4. Verfahren nach einem der vorgenannten Ansprüche, **dadurch gekennzeichnet, dass** ein RFID-Lesegerät an einer Engstelle eines Verkehrsweges angebracht ist.
